# EUROPEAN PATENT SPECIFICATION

(11) **EP 2 672 831 B1**
(45) Date of publication and mention of the grant of the patent: **26.11.2014**
(21) Application number: 12703927.9
(22) Date of filing: 26.01.2012
(51) Int. Cl.: A23C 9/00, A23C 9/154

(54) **LIQUID COMPRISING ANIMAL PROTEIN AND A CARBOXY-C1- C3-ALKYL CELLULOSE**
FLÜSSIGKEIT ENTHALTEND TIERISCHES PROTEIN UND EINE CARBOXY-C1-C3-ALKYLCELLULOSE
LIQUIDE COMPRENANT UNE PROTÉINE ANIMALE ET UNE CARBOXY-C1- C3-ALKYL CELLULOSE

(30) Priority: 08.02.2011 US 201161440531 P
(43) Date of publication of application: 18.12.2013
(73) Proprietor: Dow Global Technologies LLC, Midland, MI 48674 (US)
(72) Inventor: ADDEN, Anne, 29664 Walsrode (DE); ADDEN, Roland, 29664 Walsrode (DE); HUEBNER, Britta, NI 31311 Uetze (DE)
(74) Representative: f & e patent
(86) International application number: PCT/US2012/022669
(87) International publication number: WO 2012/109020

(56) References cited:
- WO-A1-2005/063056
- US-A1- 2004 062 846

## Description

### Field

The present invention relates to a liquid comprising animal protein and a carboxy-C₁-C₃-alkyl cellulose.

### Background

Suspensions of animal proteins, such as cow's milk may agglomerate during processing, particularly heat-treatment, which may lead to precipitation and phase separation of the suspension. Caseins are the most representative milk proteins. It is well-known that bivalent cations, such as calcium and magnesium also induce caseinate precipitation in aqueous liquids, such as milk, see Francesca Cuomo et al., "Temperature dependence of calcium and magnesium induced caseinate precipitation in H2O and D2O", in Food Chemistry 126 (2011) 8-14. Various drinks, such as dairy coffee drinks, have elevated contents of bivalent cations. Protecting animal proteins from precipitation is of high importance to the food industry.

It is known that sodium carboxymethyl cellulose can precipitate milk protein. The publication "Precipitation of milk proteins by sodium carboxymethylcellulose" by F. J.Cluskey, Elmer Lawrence Thomas; and Samuel T. Coulter, Univ. of Minnesota, St. Paul, MN, USA, in Journal of Dairy Science (1969), 52(8), 1181-5, suggests optimum conditions for precipitation of milk proteins by sodium carboxymethyl cellulose. In their study sodium carboxymethyl cellulose precipitated a maximum of 90-96% of the casein from a simplified casein system and about 71% of the total protein (principally casein) from natural skim milk. The reaction was calcium dependent, and protein-calcium-carboxymethyl cellulose bridging appears to be involved at pH levels above the isoelectric point of casein. On the other hand, at the isoelectric point (pH 4.6), carboxymethyl cellulose stabilized casein, preventing precipitation. The typical cellulose-protein complex contained 51.7% protein, 7.3% ash, 0.44% calcium and 10-17% carboxymethyl cellulose. Unfortunately, the disclosed stabilization of casein by carboxymethyl cellulose at a pH of 4.6 does not have much practical use for liquid food products having a higher pH than 4.6.

The effect of carboxymethyl cellulose (CMC) is also discussed in the study "Effect of the addition of CMC on the aggregation behaviour of proteins" by H.Yu; S. F. Sabato; G. D'Aprano; and M. Lacroix, Canadian Irradiation Centre (CIC)-Research Laboratories in Sciences Applied to Food, INRS-Institut Armand-Frappier, Laval, QC, Can. Radiation Physics and Chemistry (2004), 71(1-2), 131-135. The effect of CMC on the aggregation of a formulation based on calcium caseinate, whey protein, and a 1:1 mixture of soy protein isolate and whey protein isolate was investigated. Protein aggregation could be observed upon addition of CMC. This aggregation behavior was enhanced by physical treatments, such as heating at 90 °C for 30 minutes or gamma irradiation at 32 kGy at a pH of 8.5. Furthermore, CMC prevented precipitation in irradiated protein solutions for a period of more than 3 month at 4°C. The authors suggest that the CMC-protein interaction is electrostatic. Unfortunately, the disclosed protein stabilization by irradiation at a pH of 8.5 is not of much practical use either.

U.S. Patent No. 5,104,674 discloses microfragmented ionic polysaccharide/protein complex dispersions which are suitable for use as fat substitute compositions in food products, such as ice creams, salad dressings, dips, spreads and sauces. Exemplary thereof is a suspension of molecularly intimately complexed carboxymethyl cellulose / protein fibers comprising at least 10 weight percent of carboxymethyl cellulose gum, based on the total solids weight of said fibers. The aqueous fiber suspension is conducted through a zone of high shear to fragment the fibers to reduce substantially all of said fibers to carboxymethyl cellulose / protein complex microfragments having a maximum dimension of less than 15 microns. The weight ratio of ionic polysaccharide to solubilized protein in the complex forming solution is from 1:2 to 1:15, preferably from 1:4 to 1:10. While such high concentration of ionic polysaccharide, such as carboxymethyl cellulose gum, is desirable in the above-mentioned food products to provide a creamy texture, a high viscosity provided by the high concentration of the ionic polysaccharide is undesirable in many other food products comprising animal proteins, such as coffee, chicory coffee, tea or cacao comprising animal proteins, calcium enriched cow's milk or other beverages comprising animal proteins.

WO-A-2005/063056 discloses a process for making a powered precursor for preparing an acidic beverage upon admixture of the powdered precursor with a liquid.

US-A-2004/0062846 relates to powdered and liquid, dairy and non-dairy creamer compositions.

Accordingly, it is still desirable to stabilize animal proteins against precipitation induced by heat and/or bivalent cations, such as calcium or magnesium ions.

### Summary

Surprisingly, it has been found that small amounts of a carboxy-C₁-C₃-alkyl cellulose are useful for stabilizing animal proteins against flocculation induced by heat and/or bivalent cations, such as calcium or magnesium ions.

Accordingly, one aspect of the present invention is a liquid of a pH of 5.5 to 8.0 comprising animal protein, which has been stabilized against protein precipitation by incorporation of a carboxy-C₁-C₃-alkyl cellulose having a particle size such that no more than 15 weight percent of the particles pass a 63 micrometer mesh screen, no more than 40 weight percent of the particles pass a 200 micrometer mesh screen and no more than 10 weight percent of the particles are retained on a 1000 micrometer mesh screen, wherein the amount of the carboxy-C₁-C₃-alkyl cellulose in the liquid is from 0.005 to 0.055 g per g of animal protein.

Another aspect of the present invention is a method of stabilizing an animal protein against precipitation induced by heat-treatment or bivalent cations or both in a liquid of a pH of 5.5 to 8.0, which method comprises incorporating into the liquid a carboxy-C₁-C₃-alkyl cellulose, having a particle size such that no more than 15 weight percent of the particles pass a 63 micrometer mesh screen, no more than 40 weight percent of the particles pass a 200 micrometer mesh screen and not more than 10 weight percent of the particles are retained on a 1000 micrometer mesh screen, in an amount of 0.005 to 0.055 g of carboxy-C₁-C₃-alkyl cellulose per g of animal protein.

### Detailed Description

The liquid of the present invention has a pH of 5.5 to 8.0, preferably of 6.0 to 7.5, measured at 25 °C. Preferably the liquid is water-based. The water content typically is from 60 to 99 percent, more preferably from 80 to 95 percent, based on the total weight of the liquid. As used herein, oil - in - water emulsions, such as cow milk, are also water-based liquids. The oil content in the liquid of the present invention generally is from 0 (zero) to 14 percent, preferably from 0 to 8 percent, based on the total weight of the liquid.

The liquid of the present invention comprises an animal protein, such as a protein originating from cow milk, horse milk, goat milk, sheep milk, camel milk, asses milk, or buffalo milk. The amount of the animal protein preferably is from 0.5 to 12 percent, more preferably from 1 to 8 percent, most preferably from 2 to 4 percent, based on the total weight of the liquid.

Furthermore, the liquid of the present invention comprises a carboxy-C₁-C₃-alkyl cellulose. The amount of the carboxy-C₁-C₃-alkyl cellulose in the liquid is at least 0.005 g, preferably at least 0.010 g, more preferably at least 0.012 g, most preferably at least 0.013 and particularly at least 0.014 g, per g of animal protein. The amount of the carboxy-C₁-C₃-alkyl cellulose in the liquid is up to 0.055 g, preferably up to 0.045 g, more preferably up to 0.040 g, most preferably up to 0.035 g, and particularly up to 0.030 g, per g of animal protein. It has surprisingly been found that incorporation of these low amounts of a carboxy-C₁-C₃-alkyl cellulose having a particle size distribution as described further below in the liquid is sufficient to stabilize the animal protein in the liquid against precipitation. It has even more surprisingly been found that less stabilization is achieved when substantially more than 0.055 g carboxy-C₁-C₃-alkyl cellulose per g of animal protein is incorporated in the liquid. Only when further increasing the amount of carboxy-C₁-C₃-alkyl cellulose to a very high level, specifically to at least 0.1 g of a carboxy-C₁-C₃-alkyl cellulose ether per g of animal protein, similar protein stability has been achieved as with the amounts incorporated in the liquid of the present invention.

The carboxy-C₁-C₃-alkyl cellulose preferably comprises methyl or ethyl groups or a combination thereof. A preferred carboxy-C₁-C₃-alkyl cellulose is carboxyethyl cellulose or, more preferably, carboxymethyl cellulose. The carboxy-C₁-C₃-alkyl celluloses include their salts, preferably their sodium and potassium salts. The most preferred examples thereof are sodium carboxymethyl cellulose and carboxymethyl hydroxyethyl cellulose. The most preferred carboxy-C₁-C₃-alkyl cellulose used in the present invention is carboxymethyl cellulose (CMC), which is typically incorporated in the liquid in the form of its sodium salt. The liquid of the present invention may comprise one or more of the above-mentioned carboxy-C₁-C₃-alkyl celluloses, but their total weight should be within the range indicated above.

The carboxy-C₁-C₃-alkyl celluloses have a particle size distribution described below. The amount of the carboxy-C₁-C₃-alkyl cellulose particles that pass a 63 micrometer mesh screen is up to 15 percent, preferably up to 12 percent, more preferably up to 10 percent, most preferably up to 8 percent, and particulary up to 5 percent by weight. The amount of the carboxy-C₁-C₃-alkyl cellulose particles that pass a 200 micrometer mesh screen is up to 40 percent, preferably up to 30 percent, more preferably up to 25 percent, most preferably up to 20 percent, and particularly up to 15 percent by weight. The amount of the carboxy-C₁-C₃-alkyl cellulose particles that are retained on a 1000 micrometer mesh screen is up to 10 percent, preferably up to 8 percent, more preferably up to 5 percent, most preferably up to 2%, and particularly up to 0.5% by weight. It has surprisingly been found that these carboxy-C₁-C₃-alkyl celluloses have an improved ability to stabilize animal protein against precipitation, as compared to corresponding carboxy-C₁-C₃-alkyl celluloses in powder form having a smaller particle size.

Preferred are carboxy-C₁-C₃-alkyl celluloses, preferably carboxymethyl cellulose, which have a DS of from 0.4 to 1.4, more preferably of from 0.6 to 1.0, and most preferably of from 0.7 to 0.9. The term "DS" refers to the degree of carboxyalkyl, preferably carboxymethyl substitution, per anhydroglucose unit and means the average number of OH groups substituted with carboxyalkyl groups per anhydroglucose unit.

The carboxy-C₁-C₃-alkyl cellulose which is utilized in the present invention preferably has an unsettled bulk density of greater than 350 g/L, more preferably greater than 400 g/L. The bulk density is determined by weighing a completely filled beaker of known volume.

Preferably the carboxy-C₁-C₃-alkyl cellulose has a viscosity of less than 200 mPa·s, more preferably less than 100 mPa·s, and most preferably less than 50 mPa·s, measured as a 2 weight percent aqueous solution using a Brookfield LVT viscosimeter at 20 °C, spindle 1, 30 rpm.

Carboxy-C₁-C₃-alkyl celluloses which are useful in the liquid of the present invention and their production are described in the International Patent Publication WO 2010/117781. They can be produced in a continuous process wherein i) an unprocessed carboxy-C₁-C₃-alkyl cellulose, such as a raw material carboxymethyl cellulose, is introduced into a high shear mixer; ii) at least 20 percent, preferably at least 25 percent, or at least 30 percent, or, if conditions are selected to discourage granulation, at least 35 percent water by weight is added to the carboxy-C₁-C₃-alkyl cellulose without additional surface treatment additives; iii) carboxy-C₁-C₃-alkyl cellulose agglomerates are formed; and iv) the agglomerates are dried by non-contact drying means to form a carboxy-C₁-C₃-alkyl cellulose having the above described particle size distribution. The carboxy-C₁-C₃-alkyl cellulose is aqueous dispersible. The ability of producing carboxy-C₁-C₃-alkyl cellulose agglomerates that do not comprise a surface treatment agent is highly advantageous in liquids intended for consumption.

Preferred high shear mixers are mixing devices that are characterized by centrifugal mixing with a FROUDE number FR_{w} of larger than 11, preferably at least 50, more preferably at least 200, most preferably at least 500. The upper limitation of the FROUDE number FR_{w} is generally only given by the design and the motor power of the mixing device. Useful mixing devices generally have a FROUDE number FR_{w} of up to 2100.

The article NOBILTA™ - Feststoffmischen mit hohem Energieeintrag, Teil 1 (NOBILTA™ Solids Mixing with High Energy Intensity, Part 1) by R. Habermann, KERAMISCHE ZETTSCHRIFT (CERAMIC MAGAZINE) 4-2007, pages 254 - 259 discusses the movement of a mass of solid particles in a mixing device depending on the FROUDE number of the mixing device. In a solid mixer characterized by a FROUDE number FR_{w} of more than 11, the centrifugal forces exceed the gravitational forces of a mass of solid particles by far. Such mixing devices in operation typically cause centrifugation of the mass of solid particles and the formation of an annular layer of solid particles in the mixing device. In a preferred embodiment, the mixing device characterized by a FROUDE number FR_{w} of more than 11 is a mixer with a mixing shaft, preferably a horizontal or vertical mixer with a mixing shaft, most preferably a continuous high speed horizontal paddle mixer, typically known as ring-layer mixer. Mixing devices that are characterized by a FROUDE number FR_{w} of larger than 11, preferably at least 50, more preferably at least 200, most preferably at least 500 are high intensity mixer and are available in vertical and horizontal design, such as a continuous high speed horizontal paddle mixer, known as ring-layer mixer. The mixing device generally comprises a horizontal or vertical drum with a mixing shaft axially disposed in it. The mixing shaft typically has blades, bolts, and/or paddles protruding from it. Mixing shaft geometry can create various mixing zones for transporting, dispersing, mixing or compacting. The product to be mixed preferably forms a concentric ring via centrifugal force, and moves through the mixer in plug-like flow. Water can be added in different ways. For example, water can be introduced by single or mixed phase nozzles tangentially from the top into the annular layer of solid particles. Alternatively, the water can be introduced by a rotating hollow shaft through perforated mixing tools directly into the annular layer of solid particles. A suitable continuous high speed horizontal paddle mixer, known as ring-layer mixer, can be procured from Loedige (Paderborn, Germany), under the tradename CoriMix CM or from Hosokawa Micron B.V. (Netherlands) under the tradename Turbolizer TC. Another useful mixing device is a flow-jet mixer as described in U.S. Patent No. 3,871,625. Other useful mixers are vertical flow mixers, which are for example commercially available from Hosokawa Micron B.V. (Netherlands) under the tradename Shugi Flexomix.

The step of drying the agglomerates by non-contact drying means, in one embodiment, includes those where the non-contact drying means is a fluid bed dryer. The carboxy-C₁-C₃-alkyl cellulose agglomerate is preferably dried at a temperature of 50 °C or more, more preferably at 70 °C or more. Alternatively, the carboxy-C₁-C₃-alkyl cellulose agglomerate is dried to a residual water content of less than 10% by weight, irrespective of temperature.

Preferred liquids are dairy beverages, such as coffee, chicory coffee, tea or cacao comprising animal proteins, calcium enriched cow's milk or other beverages comprising animal protein. The incorporation of the carboxy-C₁-C₃-alkyl cellulose as described herein is particularly useful in beverages to be heat-treated, preferably beverages to be heated to a temperature of at least 40 °C, more preferably at least 60 °C, most preferably at least 80 °C, and preferably to a temperature of up to 140°C, more preferably up 130 °C, and most preferably up 120 °C, since the carboxy-C₁-C₃-alkyl cellulose agglomerates protect the animal protein in the liquid from precipitation. Heat-treatment processes are known in the art, such as pasteurization or ultra heat treatment. Heat treatment is generally conducted during 2 seconds to 30 minutes, preferably during 2 seconds to 1 minute.

In one aspect of the present invention the liquid is a milk drink comprising cow milk as the main component, such as milk drinks comprising from 60 to 95 percent by weight cow milk. The remainder of the milk drink can be additives like sweeteners or natural or man-made flavors, such as instant coffee or tea or cacao powder, fruit or berry extracts, coffee, tea or cacao liquids or water. The liquids of the present invention, preferably such milk drinks, preferably comprise from 0.035 to 0.15 weight percent, more preferably from 0.040 to 0.12 weight percent, most preferably from 0.045 to 0.10 weight percent of the above-described carboxy-C₁-C₃-alkyl cellulose, based on the total weight of the liquid of the present invention, such as a milk drink.

### Examples

The following examples are for illustrative purposes only and are not intended to limit the scope of the present invention. Unless otherwise mentioned, all parts and percentages are by weight.

### Example 1 (Animal Protein), Comparative Example A (Soy Protein) and Comparative Example B (powder grade CMC)

### Ingredients of Formulation "Coffee Drink":

| | |
|---|---|
| 93.5 % | milk |
| 3.5 % | spray dried instant coffee powder |
| 1.0-2.95 % | saccharose, refined sugar |
| 0.05-2.0 % | carboxymethyl cellulose (CMC) |

The amount of CMC in the formulation was varied by replacing it with sugar. In Example 1 fresh cow's milk containing 1.5 percent fat and 3.7 percent protein was used. In Comparative Example A soy milk containing 2.3 percent fat and 3.7 percent protein was used.

The CMC used in Example 1 and Comparative Examples A and B had a DS of 0.9, measured according to ASTM D 1439-03 "Standard Test Methods for Sodium Carboxymethylcellulose; Degree of Etherification, Test Method B: Nonaqueous Titration" and a viscosity of 26 mPa·s, measured as a 2 weight percent aqueous solution using a Brookfield LVT viscosimeter at 20 °C, spindle 1, 30 rpm. In Example 1 and Comparative Example A the CMC was in granular form having a particle size distribution as listed in Table 1. In Comparative Example B the CMC was in powder form having a particle size distribution as listed in Table 1 below.

**Table 1**

| **(Comparative) Example** | **1 / A** | **B** |
|---|---|---|
| | granular grade CMC | powder grade CMC |
| Moisture Content [%] | 9.0 | 8.0 |
| Bulk density [g/L] | 545 | 655 |
| Particle Size distribution <63µm [%] | 0 | 54 |
| Particle Size distribution <200µm [%] | 0.2 | 88 |
| Particle Size distribution >1000µm [%] | 0 | 0 |

### Preparation:

A solid blend was prepared of the coffee powder, sugar, and CMC and subsequently added to fresh cow's milk or soy milk at 20 °C in a water bath while stirring at 400 rpm until all particles were dissolved (Stirrer: IKA Eurostar power control-visc 6000). Pasteurization of the beverage was performed directly after its preparation by heating the beverage for 5 min at 85 °C in a water bath with internal temperature control. The samples were kept at 4°C up to two weeks and checked for phase separation.

### Characterization:

To quantify phase separation, the amount of supernatant liquid (in mL) was determined after centrifugation. Therefore, 15 mL of the sample were centrifuged at 4000 rpm for 10 min. The amount of supernatant liquid was directly obtained from the scale of the centrifugal vessels (Centrifuge: Multifuge 1 S, Heraeus). The results are listed in Table 2.

**Table 2**

| **(Comparative) Example** | | **A** | **1** | **B** |
|---|---|---|---|---|
| CMC (g/100g of beverage) | CMC (g/g of protein) | granular grade CMC in Soy Milk | granular grade CMC in Cow's Milk | powder grade CMC in Cow's Milk |
| | | **Supernatant liquid (in mL/15 mL sample)** | | |
| 2.00 | 0.578 | 1.35 | 8.80 | 7.40 |
| 1.50 | 0.435 | 2.30 | 10.50 | 8.80 |
| 1.20 | 0.348 | 4.60 | 8.20 | 9.10 |
| 1.00 | 0.289 | 5.40 | 9.90 | 7.70 |
| 0.70 | 0.203 | 7.20 | 7.80 | 8.90 |
| 0.60 | 0.174 | 7.50 | 8.80 | 9.10 |
| 0.50 | 0.145 | 7.50 | 10.00 | 9.70 |
| 0.40 | 0.116 | 7.60 | 7.60 | 10.1 |
| 0.30 | 0.087 | 8.20 | 1.40 | 10.5 |
| 0.20 | 0.058 | 6.90 | 1.30 | 6.90 |
| 0.10 | 0.029 | 9.40 | 0.00 | 8.50 |
| 0.07 | 0.020 | 5.70 | 0.00 | 0.20 |
| 0.05 | 0.014 | 7.80 | 0.00 | 5.90 |
| 0.04 | 0.012 | 3.70 | 0.77 | 7.90 |
| 0.03 | 0.009 | 9.30 | 8.30 | 6.10 |
| 0.00 | 0.000 | 9.60 | 7.60 | 8.30 |

As illustrated by Example 1, the liquid of the present invention comprising animal protein and the CMC described in the present patent application is a stable suspension without any phase separation (no supernatant liquid after centrifugation). The stability was tested for two weeks, no phase separation occurred in that period.

## Claims

1. A liquid of a pH of 5.5 to 8.0 comprising animal protein, which has been stabilized against protein precipitation by incorporation of a carboxy-C₁-C₃-alkyl cellulose having a particle size such that no more than 15 weight percent of the particles pass a 63 micrometer mesh screen, no more than 40 weight percent of the particles pass a 200 micrometer mesh screen and no more than 10 weight percent of the particles are retained on a 1000 micrometer mesh screen, wherein the amount of the carboxy-C₁-C₃-alkyl cellulose in the liquid is from 0.005 to 0.055 g per g of animal protein.

2. The liquid of claim 1 wherein the amount of the carboxy-C₁-C₃-alkyl cellulose in the liquid is from 0.012 to 0.040 g per g of animal protein.

3. The liquid of claim 1 or 2 wherein the carboxy-C₁-C₃-alkyl cellulose has a particle size such that no more than 12 weight percent of the particles pass a 63 micrometer mesh screen, no more than 30 weight percent of the particles pass a 200 micrometer mesh screen and not more than 5 weight percent of the particles are retained on a 1000 micrometer mesh screen.

4. The liquid of any one of the preceding claims wherein the carboxy-C₁-C₃-alkyl cellulose is a carboxymethyl cellulose having a DS of from 0.4 to 1.4.

5. The liquid of any one of the preceding claims wherein the carboxy-C₁-C₃-alkyl cellulose has a viscosity of less than 200 mPa·s, measured as a 2 weight percent aqueous solution using a Brookfield LVT viscosimeter at 20 °C, spindle 1, 30 rpm.

6. The liquid of any one of the preceding claims comprising from 0.5 to 12 weight percent of animal protein, based on the total weight of the liquid.

7. The liquid of any one of the preceding claims comprising bivalent cations.

8. The liquid of any one of the preceding claims wherein the liquid comprises cow milk.

9. The liquid of any one of the preceding claims being a heat-treated dairy beverage.

10. A method of stabilizing an animal protein against precipitation induced by heat-treatment or bivalent cations or both in a liquid of a pH of 5.5 to 8.0, which method comprises incorporating into the liquid a carboxy-C₁-C₃-alkyl cellulose, having a particle size such that no more than 15 weight percent of the particles pass a 63 micrometer mesh screen, no more than 40 weight percent of the particles pass a 200 micrometer mesh screen and not more than 10 weight percent of the particles are retained on a 1000 micrometer mesh screen, in an amount of 0.005 to 0.055 g of carboxy-C₁-C₃-alkyl cellulose per g of animal protein.

11. The method of claim 10 comprising incorporating the carboxy-C₁-C₃-alkyl cellulose set forth in any one of claims 2 to 5 into the liquid.

12. The method of claim 10 or 11 comprising incorporating the carboxy-C₁-C₃-alkyl cellulose into the liquid set forth in any one of claims 6 to 8.

13. The method of any one of claims 10 to 12 wherein after the incorporation of the carboxy-C₁-C₃-alkyl cellulose the liquid is heated to a temperature of at least 40 °C.

## Patentansprüche

1. Flüssigkeit mit einem pH von 5,5 bis 8,0, enthaltend tierisches Protein, die gegen Proteinausfällung durch Einbringen einer Carboxy-C₁-C₃-alkylcellulose mit einer Teilchengröße, so dass nicht mehr als 15 Gew.-% der Teilchen ein 63-µm-Sieb passieren, nicht mehr als 40 Gew.-% der Teilchen ein 200-µm-Sieb passieren und nicht mehr als 10 Gew.-% der Teilchen auf einem 1000-µm-Sieb verbleiben, stabilisiert ist, wobei die Menge an Carboxy-C₁-C₃-alkylcellulose in der Flüssigkeit 0,005 bis 0,055 g pro g tierisches Protein beträgt.

2. Flüssigkeit nach Anspruch 1, wobei die Menge an Carboxy-C₁-C₃-alkylcellulose in der Flüssigkeit 0,012 bis 0,040 g pro g tierisches Protein beträgt.

3. Flüssigkeit nach Anspruch 1 oder 2, wobei die Carboxy-C₁-C₃-alkylcellulose eine Teilchengröße aufweist, so dass nicht mehr als 12 Gew.-% der Teilchen ein 63-µm-Sieb passieren, nicht mehr als 30 Gew.-% der Teilchen ein 200-µm-Sieb passieren und nicht mehr als 5 Gew.-% der Teilchen auf einem 1000-µm-Sieb zurückbleiben.

4. Flüssigkeit nach einem der vorstehenden Ansprüche, wobei die Carboxy-C₁-C₃-alkylcellulose eine Carboxymethylcellulose mit einem DS von 0,4 bis 1,4 ist.

5. Flüssigkeit nach einem der vorstehenden Ansprüche, wobei die Carboxy-C₁-C₃-alkylcellulose eine Viskosität von weniger als 200 mPa·s aufweist, gemessen als 2-gewichtsprozentige wässrige Lösung unter Verwendung eines Brookfield LVT Viskosimeters bei 20°C, Spindel 1, 30 U/min.

6. Flüssigkeit nach einem der vorstehenden Ansprüche, enthaltend 0,5 bis 12 Gew.-% tierisches Protein, bezogen auf das Gesamtgewicht der Flüssigkeit.

7. Flüssigkeit nach einem der vorstehenden Ansprüche, enthaltend zweiwertige Kationen.

8. Flüssigkeit nach einem der vorstehenden Ansprüche, wobei die Flüssigkeit Kuhmilch enthält.

9. Flüssigkeit nach einem der vorstehenden Ansprüche, die ein wärmebehandeltes Milchgetränk ist.

10. Verfahren zur Stabilisierung eines tierischen Proteins gegen Ausfällung, bewirkt durch Wärmebehandlung oder zweiwertige Kationen oder beides, in einer Flüssigkeit mit einem pH von 5,5 bis 8,0, wobei das Verfahren umfasst Einbringen in die Flüssigkeit einer Carboxy-C₁-C₃-alkylcellulose mit einer Teilchengröße, so dass nicht mehr als 15 Gew.-% der Teilchen ein 63-µm-Sieb passieren, nicht mehr als 40 Gew.-% der Teilchen ein 200-µm-Sieb passieren und nicht mehr als 10 Gew.-% der Teilchen auf einem 1000-µm-Sieb verbleiben, in einer Menge von 0,005 bis 0,055 g Carboxy-C₁-C₃-alkylcellulose pro g tierisches Protein.

11. Verfahren nach Anspruch 10, umfassend Einbringen der Carboxy-C₁-C₃-alkylcellulose wie in einem der Ansprüche 2 bis 5 definiert in die Flüssigkeit.

12. Verfahren nach Anspruch 10 oder 11, umfassend Einbringen der Carboxy-C₁-C₃-alkylcellulose in die Flüssigkeit, die nach einem der Ansprüche 6 bis 8 definiert ist.

13. Verfahren nach einem der Ansprüche 10 bis 12, wobei nach dem Einbringen der Carboxy-C₁-C₃-alkylcellulose die Flüssigkeit auf eine Temperatur von mindestens 40°C erwärmt wird.

## Revendications

1. Un liquide d'un pH de 5,5 à 8,0 comprenant une protéine animale, laquelle a été stabilisée contre une précipitation de protéine par l'incorporation d'une carboxyalkyl(C₁-C₃)cellulose ayant une taille de particule telle que pas plus de 15 pour cent en poids des particules traversent un tamis à mailles de 63 micromètres, pas plus de 40 pour cent en poids des particules traversent un tamis à mailles de 200 micromètres et pas plus de 10 pour cent en poids des particules sont retenues sur un tamis à mailles de 1 000 micromètres, dans lequel la quantité de la carboxyalkyl(C₁-C₃)cellulose dans le liquide va de 0,005 à 0,055 g par g de protéine animale.

2. Le liquide de la revendication 1 dans lequel la quantité de la carboxyalkyl(C₁-C₃)cellulose dans le liquide va de 0,012 à 0,040 g par g de protéine animale.

3. Le liquide de la revendication 1 ou de la revendication 2 dans lequel la carboxyalkyl(C₁-C₃)cellulose a une taille de particule telle que pas plus de 12 pour cent en poids des particules traversent un tamis à mailles de 63 micromètres, pas plus de 30 pour cent en poids des particules traversent un tamis à mailles de 200 micromètres et pas plus de 5 pour cent en poids des particules sont retenues sur un tamis à mailles de 1 000 micromètres.

4. Le liquide de n'importe laquelle des revendications précédentes dans lequel la carboxyalkyl(C₁-C₃)cellulose est une carboxyméthylcellulose ayant un DS de 0,4 à 1,4.

5. Le liquide de n'importe laquelle des revendications précédentes dans lequel la carboxyalkyl(C₁-C₃)cellulose a une viscosité inférieure à 200 mPa·s, mesurée en tant que solution aqueuse à 2 pour cent en poids à l'aide d'un viscosimètre LVT de Brookfield à 20 °C, axe 1, 30 tr/mn.

6. Le liquide de n'importe laquelle des revendications précédentes comprenant de 0,5 à 12 pour cent en poids de protéine animale, rapporté au poids total du liquide.

7. Le liquide de n'importe laquelle des revendications précédentes comprenant des cations bivalents.

8. Le liquide de n'importe laquelle des revendications précédentes, le liquide comprenant du lait de vache.

9. Le liquide de n'importe laquelle des revendications précédentes étant une boisson lactée traitée thermiquement.

10. Une méthode de stabilisation d'une protéine animale contre une précipitation induite par un traitement thermique ou des cations bivalents, ou les deux, dans un liquide d'un pH de 5,5 à 8,0, laquelle méthode comprend l'incorporation dans le liquide d'une carboxyalkyl(C₁-C₃)cellulose, ayant une taille de particule telle que pas plus de 15 pour cent en poids des particules traversent un tamis à mailles de 63 micromètres, pas plus de 40 pour cent en poids des particules traversent un tamis à mailles de 200 micromètres et pas plus de 10 pour cent en poids des particules sont retenues sur un tamis à mailles de 1 000 micromètres, dans une quantité de 0,005 à 0,055 g de carboxyalkyl(C₁-C₃)cellulose par g de protéine animale.

11. La méthode de la revendication 10 comprenant l'incorporation de la carboxyalkyl(C₁-C₃)cellulose énoncée dans n'importe laquelle des revendications 2 à 5 dans le liquide.

12. La méthode de la revendication 10 ou de la revendication 11 comprenant l'incorporation de la carboxyalkyl(C₁-C₃)cellulose dans le liquide énoncé dans n'importe laquelle des revendications 6 à 8.

13. La méthode de n'importe laquelle des revendications 10 à 12 dans laquelle, après l'incorporation de la carboxyalkyl(C₁-C₃)cellulose, le liquide est chauffé jusqu'à une température d'au moins 40 °C.
